# EUROPEAN PATENT SPECIFICATION

(11) **EP 4 324 886 B1**
(45) Date of publication and mention of the grant of the patent: **16.07.2025**
(21) Application number: 23187964.4
(22) Date of filing: 26.07.2023
(51) Int. Cl.: C09C 1/00, G01J 3/46, G01J 1/46, C09D 7/62, C09D 5/33

(54) **COATING PIGMENTS AND METHODS OF MAKING THEREOF**
BESCHICHTUNGSPIGMENTE UND VERFAHREN ZU IHRER HERSTELLUNG
PIGMENTS DE REVÊTEMENT ET LEURS PROCÉDÉS DE FABRICATION

(30) Priority: 27.07.2022 US 202217815271
(43) Date of publication of application: 21.02.2024
(73) Proprietor: Axalta Coating Systems GmbH, 4057 Basel (CH)
(72) Inventor: Murphy, Neil, Audubon, 19103 (US); O'Connor, Kevin, Ontario, K0A - R5J (CA)
(74) Representative: LKGlobal UK Ltd.

(56) References cited:
- EP-A1- 2 559 739
- WO-A1-2020/225328

## Description

### TECHNICAL FIELD

The technical field relates generally to coatings, and more particularly to dielectric pigments having a metallic appearance for a radar compatible coating that, for example, can be applied onto a component substrate to provide an aesthetic appearance while being substantially transparent to radar, and methods for making such dielectric pigments.

### BACKGROUND

Radar is used in motor vehicles to detect objects for a variety of purposes, such as autonomous driving, adaptive cruise control, blind spot detection, automatic braking, and other advanced driver assistance systems. The radar sensor is typically mounted behind a component of the motor vehicle, typically a bumper or vehicle panel, so the component covers the radar device. In this regard, the radar signal must penetrate the bumper when traveling to an object to be detected, and then penetrate the bumper again when reflected off of the object and returning to the vehicle. The bumper, including any coatings applied to the surface of the bumper, can transmit, reflect, or absorb radar. Any reflection or absorption of the radar signal limits the effective detection range of the radar. For the radar to be useful for automatic braking or other advanced or autonomous driving features, the effective range of the radar must be at least as far as the braking distance of the vehicle at the driving speed.

If the component, e.g., the bumper or vehicle panel, behind which the radar is mounted is metal, the effective range of the radar is zero, so the components utilized are typically plastic or other non-metallic materials. The component includes the substrate, but also typically includes a coating overlying the substrate. Motor vehicle coatings typically include a basecoat, and often also include a primer coat and/or a clearcoat, with an interface between each layer. The radar typically used in motor vehicles for detecting objects is 77 giga hertz (GHz) band radar, which describes a category of radar that includes frequencies from about 76 to 81 GHz (e.g., W Band).

EP 2 559 739 A1 (JDS Uniphase Corporation) describes a method of forming a microstructured pigment flake, which method comprises: providing a microstructured dielectric core to a fluidized bed and encapsulating the microstructured dielectric core by chemical vapor deposition while in the fluidized bed so as to form an encapsulation layer encapsulating the microstructured dielectric core.

WO 2020/225328 A1 (Oreal) discloses a multilayer material with an odd number (N) of layers, said multilayer material more specifically comprising at least three layers wherein each layer consists of a material A or of a material B different from A, said successive layers A and B being alternated and two adjacent layers having different refractive indices.

The transmission of radar through a typical bumper substrate and the coating layers thereon is therefore important for the effective operation of many vehicle radar systems. Further, many vehicle exterior coating or paint systems include ingredients that provide an aesthetically desirable appearance. For example, many coating systems use special effect ingredients, such as metallic effect ingredients or the like, to enhance the aesthetic appearance of the paint. Unfortunately, some of these ingredients can confound a radar system's functionality when applied to a component substrate, such as, for example, a plastic bumper substrate or the like, because these ingredients are not radar compatible (e.g., not substantially transparent or transmissive to radar signals) as they substantially reflect and/or absorb radar signals, thereby limiting or blocking transmission of the radar through the component panel.

Accordingly, it is desirable to provide special effect ingredients for radar compatible coatings that, for example, can be applied onto a component substrate to provide an aesthetic appearance while being substantially transmissive to radar. Furthermore, other desirable features and characteristics of the present disclosure will become apparent from the subsequent detailed description and the appended claims, taken in conjunction with this background.

### SUMMARY

Dielectric pigments having a metallic appearance for radar compatible coatings and methods for making such dielectric pigments are provided herein. The dielectric pigment includes a flake. The flake has a thickness of from 500 to 1200 nm and includes a plurality of alternating layers of dielectric materials including a first layer formed of a first dielectric material having a first refractive index in the visible spectrum range and a second layer disposed adjacent to the first dielectric layer and formed of a second dielectric material having a second refractive index in the visible spectrum range that is different than the first refractive index.

The method for making dielectric pigments as defined hereinabove and in the appended claims includes forming a plurality of alternating layers of dielectric materials overlying a substrate. Forming the plurality of alternating layers of dielectric material includes depositing a first layer of a first dielectric material overlying the substrate. The first dielectric material has a first refractive index in the visible spectrum range. A second layer of a second dielectric material is deposited overlying the first layer. The second dielectric material has a second refractive index in the visible spectrum range that is different than the first refractive index. The method further includes removing the substrate from the plurality of alternating layers of dielectric materials and breaking, crushing, and/or grinding the plurality of alternating layers into flakes to form the dielectric pigments.

The radar compatible coating includes one or more resins. Dielectric pigments are incorporated into the one or more resins and have a metallic appearance. Each of the dielectric pigments includes a flake a thickness of from 500 to 1200 nm. The flake includes a plurality of alternating layers of dielectric materials including a first layer formed of a first dielectric material having a first refractive index in the visible spectrum range and a second layer disposed adjacent to the first dielectric layer and formed of a second dielectric material having a second refractive index in the visible spectrum range that is different than the first refractive index. Optionally, the radar compatible coating further includes one or more additives, one or more promoters, one or more curing agents, a water and/or solvent-based carrier, one or more colorants, one or more pigments, or combinations thereof.

### BRIEF DESCRIPTION OF THE DRAWINGS

The various embodiments will hereinafter be described in conjunction with the following drawing figures, wherein like numerals denote like elements, and wherein:
FIG. 1 illustrates a cross-sectional view of a radar compatible coating that includes dielectric pigments incorporated thereon and that is disposed on a substrate in accordance with an exemplary embodiment;
FIG. 2 illustrates a screen shot of details of a layer structure of a candidate dielectric pigment within a paint or resin matrix generated from one or more predictive models in accordance with an exemplary embodiment;
FIG. 3 is a graphical representation of reflection and transmission at 0.0 degrees over a broad wavelength ranging including the visible spectrum range of the layer structure of the candidate dielectric pigment depicted in FIG. 2;
FIG. 4 is a visual representation of reflection and transmission from 0.0 to 89.0 degrees in the visible spectrum range of the layer structure of the candidate dielectric pigment depicted in FIG. 2;
FIG. 5 is a visual representation of reflection and transmission from 0.0 to 60.0 degrees in the visible spectrum range of the layer structure of the candidate dielectric pigment depicted in FIG. 2;
FIG. 6 illustrates a table of corresponding visible appearances values including a color of the layer structure of the candidate dielectric pigment depicted in FIG. 2;
FIG. 7 illustrates a block diagram of a method for making dielectric pigments having a metallic appearance for a radar compatible coating in accordance with an exemplary embodiment; and
FIG. 8 illustrates a perspective view of a system for determining a radar compatible coating in accordance with an exemplary embodiment.

### DETAILED DESCRIPTION

The following detailed description is merely exemplary in nature and is not intended to limit the various embodiments or the application and uses thereof. Furthermore, there is no intention to be bound by any theory presented in the preceding background or the following detailed description.

A vehicle "component," as used herein, includes a plastic or polymeric substrate with an overlying coating. The term "overlying," as used herein, means the overlying material may be physically touching the underlying substrate, or the overlying material may be physically separated from the underlying substrate by an intervening material, such as an overlying layer that may be separated from an underlying substrate by another layer. It is understood that a component may be rotated or moved, so reference to one component overlying another refers to a particular orientation, with the understanding that the actual component may be rotated into a different orientation. The term "vehicle," as used herein, refers to a motor vehicle, such as a car, truck, airplane, or other device propelled through space with a motor or engine. The term vehicle includes vehicles propelled by a motor burning fuel for power, and a vehicle propelled by an engine using electricity. The overlying coating of the component includes one or more of a primer, a basecoat, and a clearcoat.

Various embodiments contemplated herein relate to dielectric pigments having a metallic appearance for a radar compatible coating that, for example, can be applied onto a component substrate to provide an aesthetic appearance while being substantially transmissive to radar. As used herein, the term "radar compatible" is understood to mean substantially transparent or transmissive to radar signals with relatively low (e.g., radar signal loss is less than about 20%, or 1 dB) or no transmission loss of the radar signal while traveling through the designated medium.

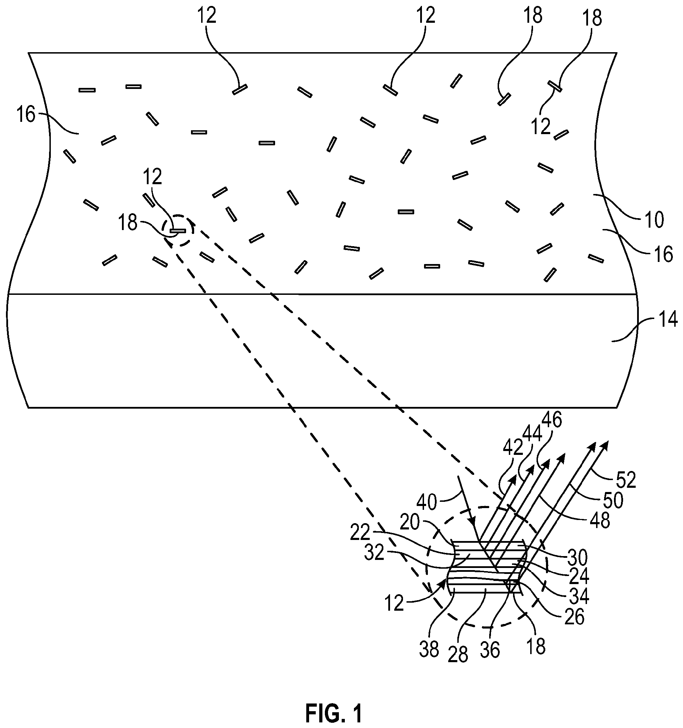

Referring to FIG. 1, a cross-sectional view of a radar compatible coating 10 that includes dielectric pigments 12 incorporated therein in accordance with an exemplary embodiment is provided. The radar compatible coating 10 is disposed on a substrate 14. The substrate 14 may be a part, a component such as a vehicle body or trim panel, for example, a bumper fascia, skin, or trim portion.

In an exemplary embodiment, the radar compatible coating 10 is a paint or coating composition that is applied to the substrate 14 in an uncured or wet state and that is subsequently cured and/or dried. Paint formulation may be, for example, a primer formulation, a sealer formulation, a basecoat formulation, a clearcoat formulation, a topcoat formulation, and/or a tinted coat formulation. In an exemplary embodiment, the radar compatible coating 10 is a basecoat.

The radar compatible coating 10 includes a paint or resin matrix 16. Non-limiting examples of resins that may be present in the paint or resin matrix 16 include one or more types of resins, such as an acrylic resin, an epoxy resin, a polyurethane resin, and/or the like. In addition to the dielectric pigments 12 incorporated therein, the radar compatible coating 10 may include various other ingredients such as various additives, promoters, curing agents, a water and/or solvent-based carrier that flashes off during drying or curing of the paint formulation, colorants, and other pigments that may add special effect and/or color without significantly deteriorating the radar transparency or transmissivity of the coating 10.

In the uncured state, the radar compatible coating 10 may be sprayed or otherwise deposited onto the underlying substrate 14 using conventional techniques. For example, the radar compatible coating 10 may be deposited onto the underlying substrate 14 via an applicator, such as a spray gun, for example in a refinishing paint setting or alternatively, in an industrial painting setting. In another example, the applicator may be a printhead, for example in a refinishing paint setting or alternatively, in an industrial painting setting. In yet another example, the applicator may be a rotary bell applicator, for example in an industrial painting setting. Once cured and/or dried, the radar compatible coating 10 provides an aesthetic appearance, protection and/or improved durability to the underlying substrate 14 and is substantially transparent or transmissive to radar signals with relatively low radar signal loss.

In an exemplary embodiment, the dielectric pigments 12 include or are in the form of flakes 18 that have a highly reflective or metallic appearance in the visible spectrum range. As used herein, the "visible spectrum range" is understood to mean wavelengths of from about 400 about 700 nm.

In an exemplary embodiment, each flake 18 includes a plurality of alternating layers 20, 22, 24, 26, 28 of dielectric materials 30, 32, 34, 36, 38. Adjacent layers 20, 22, 24, 26, 28 are formed of different dielectric materials 30, 32, 34, 36, 38 that have different refractive indexes in the visible spectrum range. In an exemplary embodiment, the alternating layers 20, 22, 24, 26, 28 of dielectric materials 30, 32, 34, 36, 38 with different refractive indexes improves the total reflection of light in the visible spectrum range to provide a highly reflective, mirror-like or metal appearance. In particular, an incoming light ray(s) (indicated by single headed arrow 40) traveling through the paint or resin matrix 16, which has a refractive index of, for example about 1.5, impinges on the flake 18 and portions of the light ray(s) 40 are reflected back (indicated by arrows 42, 44, 46, 48, 50, 52) at each interface where there is a change in refractive index to improve the total reflection of the light ray 40 from the flake 18 and provide an enhanced metal appearance. Multiple reflection, absorption, and transmission events occur at each interface between the alternating layers.

In an exemplary embodiment, the dielectric materials 30, 32, 34, 36, 38 of adjacent layers 20, 22, 24, 26, 28 have one layer with a refractive index of from about 1.25 to about 2.0 and the other layer with a refractive index of from about 2.0 to about 3.0, for example, from about 1.25 to about 1.75 and from about 2.25 to about 2.75, respectively.

In an exemplary embodiment, the dielectric materials 30, 32, 34, 36, 38 are selected from the group of semi-conductors or insulators. In an exemplary embodiment, the dielectric materials 30, 32, 34, 36, 38 are selected from the group of metal oxides. In an exemplary embodiment, the dielectric materials of adjacent layers 20, 22, 24, 26, 28 are SiO₂ and TiO₂, respectively, for example alternating layers of SiO₂ and TiO₂ throughout the stack of layers 20, 22, 24, 26, 28.

In an exemplary embodiment, the thickness of each layer 20, 22, 24, 26, 28, the number layers 20, 22, 24, 26, 28, and the concentration of the dielectric pigments 12 in the coating 10 is designed or formulated to further enhance and improve the total reflection of the light ray 40 from the flake 18. In an exemplary embodiment, each of the alternating layers 20, 22, 24, 26, 28 have a corresponding thickness of from about 30 to about 200 nm, for example from about 50 to about 190 nm. In an exemplary embodiment, the plurality of alternating layers 20, 22, 24, 26, 28 is from about 5 to about 15 layers, for example from about 6 to about 12 layers. Each of the flakes 18 has an overall thickness of from about 500 to about 1200 nm, for example of from about 500 to about 1000 nm. In an exemplary embodiment, each of the flakes has a radius of from about 10 to about 25 µm. In an exemplary embodiment, the dielectric pigments 12 are present in the radar compatible coating 10 in an amount of about 0.5 to 20%, of the radar compatible coating 10.

As discussed above, the dielectric pigments 12 are substantially transparent to radar. In an exemplary embodiment, the dielectric materials that form the alternating layers 20, 22, 24, 26, 28 of the dielectric pigments 12 each have a corresponding dielectric constant of about 10 or less, for example from about 2.5 to about 8 in the radar frequency range of from about 76 to about 81 GHz. In an exemplary embodiment, the dielectric materials that form the alternating layers 20, 22, 24, 26, 28 of the dielectric pigments 12 each have a corresponding permittivity of about 15 or less, for example about 2.5 to about 12 in a radar frequency range of from about 76 to about 81 GHz.

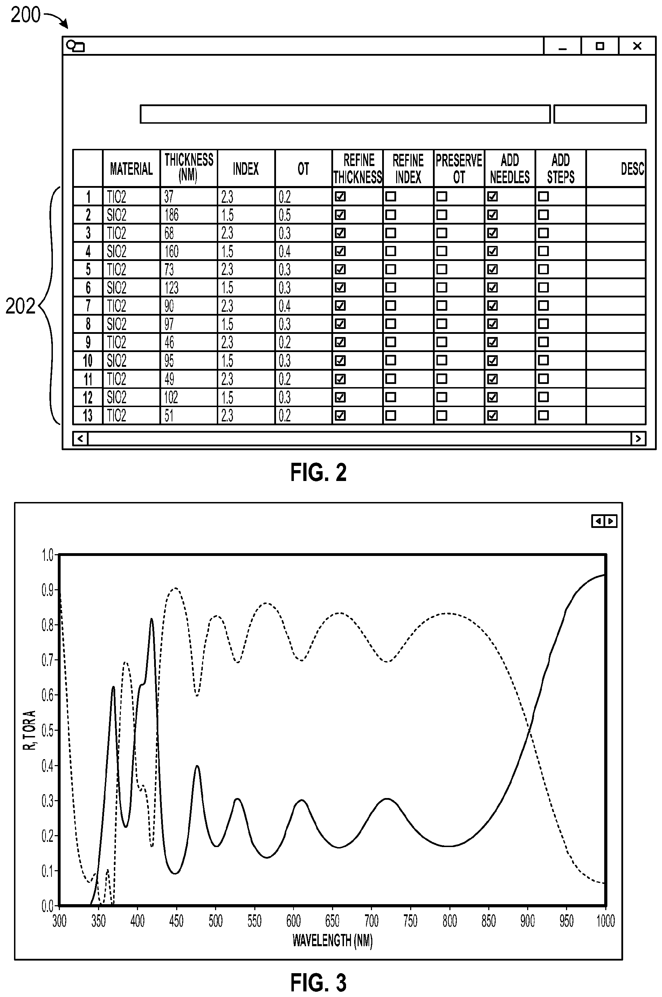

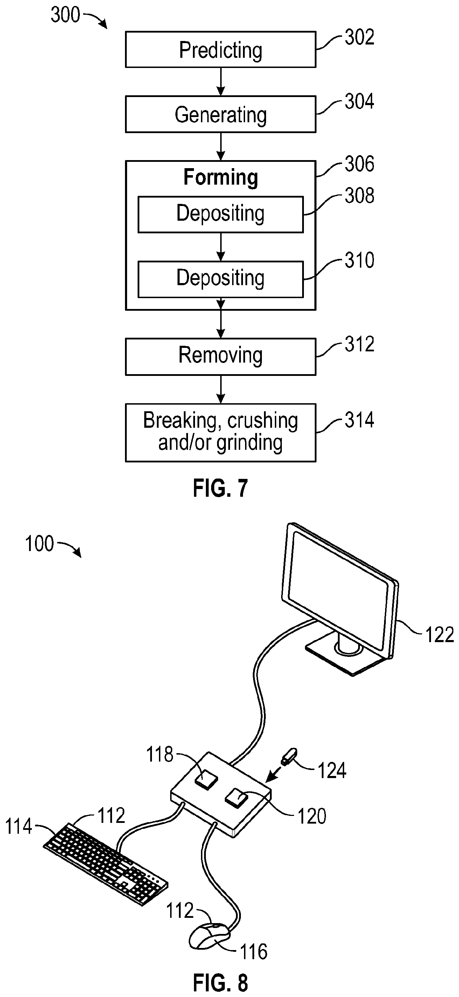

FIG. 7 illustrates a method 300 for making dielectric pigments having a metallic appearance for a radar compatible coating in accordance with an exemplary embodiment. FIG. 2 illustrates a screen shot 200 of details of a layer structure 202 of a candidate dielectric pigment within a paint or resin matrix generated from one or more predictive models in accordance with an exemplary embodiment. In an exemplary embodiment, the one or more predictive models utilizes two or more predictive models. For example, a first predictive model that is configured to predict a corresponding color for each of one or more candidate dielectric pigments within a paint or resin matrix, and a second predictive model that is configured to predict a radar property for each of the one or more candidate dielectric pigments within the paint or resin matrix. Predictive models that are configured to predict colors for candidate formulations are well-known in the industry. A non-limiting example of predictive model that is used to predict colors for candidate formulations is described in U.S. Patent No. 7,466,415, filed May 6, 2004, which is owned by the assignee of the present application. Two non-limiting examples of predictive models that are used to predict radar properties, such as a radar transmission property, for example, a permittivity response of an ingredient, a coating formulation, and/or a coating formed from the coating formulation, is described in US2022-0155430A1, filed on November 18, 2020, and US2022-0404202A1, filed on June 16, 2021, which are owned by the assignee of the present application.

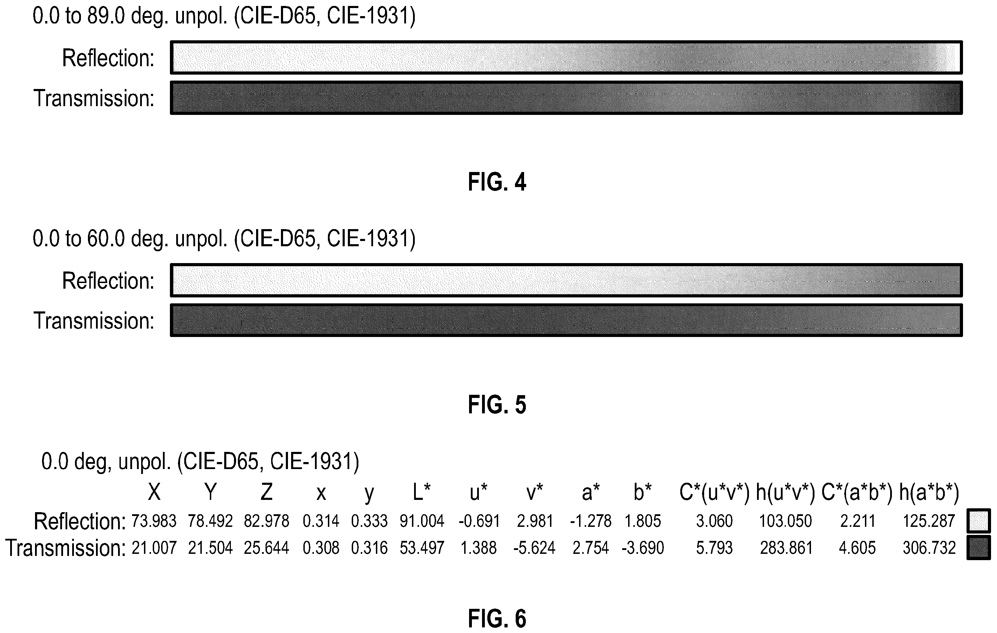

Further, FIG. 3 is a graphical representation of reflection and transmission at 0.0 degrees over a broad wavelength ranging including the visible spectrum range of the layer structure 202 of the candidate dielectric pigment depicted in FIG. 2. FIG. 4 is a graphical representation of reflection and transmission from 0.0 to 89.0 degrees in the visible spectrum range of the layer structure 202 of the candidate dielectric pigment depicted in FIG. 2. FIG. 5 is a graphical representation of reflection and transmission from 0.0 to 60.0 degrees in the visible spectrum range of the layer structure of the candidate dielectric pigment depicted in FIG. 2. FIG. 6 illustrates a table of corresponding visible appearances values including a color of the layer structure 202 of the candidate dielectric pigment depicted in FIG. 2.

Referring to FIGS. 2-7, the method 300 includes predicting (STEP 302), using a processor and the one or more predictive models as described above, the corresponding layer structure 202, a corresponding visible appearance including a color (shown in FIGS. 3-6) additional predictive capabilities include real-time optimization and visualization of predicted reflectance, transmittance, absorptance throughout the desired wavelength range (FIG. 3.). An example color rendering as a function of the angle of incidence can also be shown (FIGS. 4-5), and additional tabular data can be included to provide specific color information including tristimulus values CIEXYZ and CIELAB values as well as hue and chroma information, and a corresponding radar property for each of the one or more candidate dielectric pigments within the paint or resin matrix. The dielectric pigments that corresponds to one of the one or more corresponding candidate dielectric pigments within the paint or resin matrix that is the same or substantially similar in appearance to a target metal-containing coating including the color is generated (STEP 304) based at least in part on the corresponding visible appearance including the color and the corresponding radar properties for the one of the one or more candidate dielectric pigments.

The method 300 further includes forming (STEP 306) a plurality of alternating layers of dielectric materials overlying a substrate. In one example, the plurality of alternating layers of dielectric materials that correspond to the layer structure 202 of the one of the one or more candidate dielectric pigments that is the same or substantially similar in appearance to a target metal-containing coating is deposited overlying a mylar film substrate. This includes depositing (STEP 308) a first layer of a first dielectric material overlying the mylar film substrate, wherein the first dielectric material has a first refractive index in the visible spectrum range; and depositing (STEP 310) a second layer of a second dielectric material overlying the first layer, wherein the second dielectric material has a second refractive index in the visible spectrum range that is different than the first refractive index. In an exemplary embodiment, the layers are deposited using a physical vapor deposition (PVD) process. In an exemplary embodiment, a sol gel dipping process may optionally be used to deposit outer SiO₂ layers on the dielectric pigments to improve robustness for mixing the dielectric pigments into the paint or resin matrix.

The method 300 continues by removing (STEP 312) the substrate (e.g., the mylar film substrate, for example by dissolving the mylar or by mechanical means) from the plurality of alternating layers of dielectric materials. Either before, during or after removing (STEP 314), the plurality of alternating layers are broken, crushed, and/or ground into flakes to form the dielectric pigments. The grinding process is intended to create a flake that is of an appropriate diameter to ensure geometric compatibility with various application processes discussed in paragraph [0024]. For instance, an example flake diameter range could be 5 to 25 microns. In certain instances, sieving could be used in order to control the flake diameter and size distribution.

Referring to FIG. 8, a computer 100 may be used as a device to implement the techniques and methods described herein. The computer 100 may include an input device 112, such as a keyboard 114, a mouse 116, electronic communication devices such as a modem, or a variety of other communication devices. The input device 112 communicates with a processor 118 (processing unit) and/or a memory 120 of the computer, where the processor 118 and the memory 120 communicate with each other. A wide variety of processor 118 and memory 120 embodiments are known to those skilled in the art. The computer 100 also includes an output device 122, such as the monitor illustrated. Other exemplary embodiments of an output device 122 include a modem, a printer, or other components known to those skilled in the art. The methods and techniques described above may be implemented on the computer 100.

A computer readable medium 124 embodies a computer program, where the computer program directs the computer to implement the method and techniques described above. The computer readable medium may be an SD card, a USB storage medium, a floppy disk, a CD-ROM, a DVD, a hard drive, or other devices that are readable by a computer, and that include memory for saving the computer program. In some embodiments, the computer program may be electronically downloaded to the computer, but the downloaded computer program is saved on a tangible device somewhere.

In an exemplary embodiment, the computer program directs the computer to request input from the input device 112, wherein the requested input is directed towards obtaining a reflectance measurement of a target coating to characterize a color of the target coating. The computer program directs the processor 118 to generate one or more candidate formulas to determine color matching to the color of the target coating, where the processor 118 may access one or more mathematical/predictive model(s), an algorithm for example a genetic algorithm, or a software implemented expert system to generate the candidate formulas. The computer program directs the processor 118 to access or otherwise cooperative with one or more predictive models to predict the corresponding color in the corresponding radar property for each of the one or more candidate formulas. Simultaneously or subsequently, the computer program directs the processor 118 to generate a radar compatible coating composition that is the same or substantially similar in appearance to the target coating including color based at least in part on the corresponding color in the corresponding radar property for a selected one of the candidate formulations. The computer program directs the output device 122 to present the radar compatible coating composition including its associated color and radar property, and/or any other information as mentioned above.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It is understood that various changes may be made in the function and arrangement of elements described in an exemplary embodiment without departing from the scope of the disclosure as set forth in the appended claims.

## Claims

1. A dielectric pigment (12) having a metallic appearance for a radar compatible coating (10), the dielectric pigment comprising:
a flake (18) having a thickness of from 500 to 1200 nm and comprising a plurality of alternating layers (20, 22, 24, 26, 28) of dielectric materials including a first layer formed of a first dielectric material having a first refractive index in the visible spectrum range and a second layer disposed adjacent to the first dielectric layer and formed of a second dielectric material having a second refractive index in the visible spectrum range that is different than the first refractive index.

2. The dielectric pigment according to claim 1, wherein the first refractive index is from 1.25 to 2.0 and the second refractive index is from 2.0 to 3.0,
preferably wherein the first refractive index is from 1.25 to 1.75 and the second refractive index is from 2.25 to 2.75.

3. The dielectric pigment according to claim 1 or claim 2, wherein the visible spectrum range is defined by wavelengths of from 360 to 760 nm.

4. The dielectric pigment according to any one of claims 1 to 3, wherein the dielectric materials each have a corresponding dielectric constant of 10 or less in a radar frequency range of from 76 to 81 GHz;
preferably wherein the dielectric materials each have a corresponding dielectric constant of from 1.5 to 8 in the radar frequency range of from 76 to 81 GHz.

5. The dielectric pigment according to any one of claims 1 to 4, wherein the dielectric materials each have a corresponding permittivity of 15 or less in a radar frequency range of from 76 to 81 GHz.

6. The dielectric pigment according to any one of claims 1 to 5, wherein the flake is **characterized by** at least one of:
a thickness of from 500 to 1000 nm; and,
a radius of from 10 to 25 µm.

7. The dielectric pigment according to any one of claims 1 to 6, wherein the dielectric materials are selected from the group of semi-conductor materials.

8. The dielectric pigment according to any one of claims 1 to 7, wherein the dielectric materials are selected from the group of metal oxides.

9. The dielectric pigment according to any one of claims 1 to 6, wherein the first dielectric material includes SiO₂ and the second dielectric material includes TiO₂.

10. The dielectric pigment according to any one of claims 1 to 6, wherein the plurality of alternating layers of dielectric materials are alternating layers of SiO₂ and TiO₂.

11. The dielectric pigment according to any one of claims 1 to 10, wherein each of the alternating layers have a corresponding thickness of from 30 to 200 nm.

12. The dielectric pigment according to any one of claims 1 to 11, wherein the plurality of alternating layers of dielectric materials is from 5 to 15 layers.

13. A method for making dielectric pigments (12) as defined in claim 1, the method comprising the steps of:
forming a plurality of alternating layers (20, 22, 24, 26, 28) of dielectric materials overlying a substrate, wherein forming the plurality of alternating layers of dielectric material includes:
depositing a first layer of a first dielectric material overlying the substrate, wherein the first dielectric material has a first refractive index in the visible spectrum range; and,
depositing a second layer of a second dielectric material overlying the first layer, wherein the second dielectric material has a second refractive index in the visible spectrum range that is different than the first refractive index;
removing the substrate from the plurality of alternating layers of dielectric materials; and,
breaking, crushing, and/or grinding the plurality of alternating layers into flakes (18) to form the dielectric pigments.

14. The method according to claim 13, wherein forming the plurality of alternating layers of dielectric materials includes using a physical vapor deposition (PVD) process to deposit the first and second layers.

15. The method according to claim 13 or claim 14 further comprising the steps of:
predicting, using a processor (118) and one or more predictive models, a corresponding layer structure, a corresponding visible appearance including a color, and a corresponding radar property for each of one or more candidate dielectric pigments within a paint or resin matrix; and,
generating, using the processor (118), the dielectric pigments that corresponds to one of the one or more corresponding candidate dielectric pigments within the paint or resin matrix that is the same or substantially similar in appearance to a target metal-containing coating including the color, wherein generating is based at least in part on the corresponding visible appearance including the color and the corresponding radar properties for the one of the one or more candidate dielectric pigments, and wherein forming the plurality of alternating layers of dielectric materials includes forming the plurality of alternating layers of dielectric materials that correspond to the corresponding layer structure of the one of the one or more candidate dielectric pigments.

16. A radar compatible coating (10) comprising:
one or more resins (16);
dielectric pigments (12) incorporated into the one or more resins and having a metallic appearance, wherein each of the dielectric pigments comprises a flake (18) having a thickness of from 500 to 1200 nm, said flake (18) comprising a plurality of alternating layers (20, 22, 24, 26, 28) of dielectric materials including a first layer formed of a first dielectric material having a first refractive index in the visible spectrum range and a second layer disposed adjacent to the first dielectric layer and formed of a second dielectric material having a second refractive index in the visible spectrum range that is different than the first refractive index; and,
optionally one or more additives, one or more promoters, one or more curing agents, a water and/or solvent-based carrier, one or more colorants, one or more pigments, or combinations thereof.

## Patentansprüche

1. Dielektrisches Pigment (12) mit einem metallischen Erscheinungsbild für eine radarkompatible Beschichtung (10), wobei das dielektrische Pigment Folgendes umfasst:
ein Plättchen (18), das eine Dicke von 500 bis 1200 nm aufweist und mehrere abwechselnde Schichten (20, 22, 24, 26, 28) aus dielektrischen Materialien umfasst, darunter eine erste Schicht, die aus einem ersten dielektrischen Material mit einem ersten Brechungsindex im Bereich des sichtbaren Spektrums ausgebildet ist, und eine zweite Schicht, die der ersten dielektrischen Schicht benachbart angeordnet ist und aus einem zweiten dielektrischen Material mit einem zweiten Brechungsindex im Bereich des sichtbaren Spektrums, der anders als der erste Brechungsindex ist, ausgebildet ist.

2. Dielektrisches Pigment nach Anspruch 1, wobei der erste Brechungsindex 1,25 bis 2,0 beträgt und der zweite Brechungsindex 2,0 bis 3,0 beträgt,
wobei vorzugsweise der erste Brechungsindex 1,25 bis 1,75 beträgt und der zweite Brechungsindex 2,25 bis 2,75 beträgt.

3. Dielektrisches Pigment nach Anspruch 1 oder 2, wobei der Bereich des sichtbaren Spektrums durch Wellenlängen von 360 bis 760 nm definiert ist.

4. Dielektrisches Pigment nach einem der Ansprüche 1 bis 3, wobei die dielektrischen Materialien in einem Radarfrequenzbereich von 76 bis 81 GHz jeweils eine entsprechende Dielektrizitätskonstante von 10 oder kleiner aufweisen;
wobei vorzugsweise die dielektrischen Materialien in dem Radarfrequenzbereich von 76 bis 81 GHz jeweils eine entsprechende Dielektrizitätskonstante von 1,5 bis 8 aufweisen.

5. Dielektrisches Pigment nach einem der Ansprüche 1 bis 4, wobei die dielektrischen Materialien in einem Radarfrequenzbereich von 76 bis 81 GHz jeweils eine entsprechende Permittivität von 15 oder kleiner aufweisen.

6. Dielektrisches Pigment nach einem der Ansprüche 1 bis 5, wobei das Plättchen durch wenigstens eines der Folgenden gekennzeichnet ist:
eine Dicke von 500 bis 1000 nm; und
einen Radius von 10 bis 25 µm.

7. Dielektrisches Pigment nach einem der Ansprüche 1 bis 6, wobei die dielektrischen Materialien aus der Gruppe der Halbleitermaterialien ausgewählt sind.

8. Dielektrisches Pigment nach einem der Ansprüche 1 bis 7, wobei die dielektrischen Materialien aus der Gruppe der Metalloxide ausgewählt sind.

9. Dielektrisches Pigment nach einem der Ansprüche 1 bis 6, wobei das erste dielektrische Material SiO₂ umfasst und das zweite dielektrische Material TiO₂ umfasst.

10. Dielektrisches Pigment nach einem der Ansprüche 1 bis 6, wobei die mehreren abwechselnden Schichten aus dielektrischen Materialien abwechselnde Schichten aus SiO₂ und TiO₂ sind.

11. Dielektrisches Pigment nach einem der Ansprüche 1 bis 10, wobei jede der abwechselnden Schichten eine entsprechende Dicke von 30 bis 200 nm aufweist.

12. Dielektrisches Pigment nach einem der Ansprüche 1 bis 11, wobei die mehreren abwechselnden Schichten aus dielektrischen Materialien 5 bis 15 Schichten sind.

13. Verfahren zur Herstellung dielektrischer Pigmente (12) nach Anspruch 1, wobei das Verfahren folgende Schritte umfasst:
Ausbilden mehrerer abwechselnder Schichten (20, 22, 24, 26, 28) aus dielektrischen Materialien aufgelagert auf ein Substrat, wobei das Ausbilden der mehreren abwechselnden Schichten aus dielektrischem Material Folgendes umfasst:
Abscheiden einer ersten Schicht aus einem ersten dielektrischen Material aufgelagert auf das Substrat, wobei das erste dielektrische Material einen ersten Brechungsindex im Bereich des sichtbaren Spektrums aufweist; und
Abscheiden einer zweiten Schicht aus einem zweiten dielektrischen Material aufgelagert auf die erste Schicht, wobei das zweite dielektrische Material einen zweiten Brechungsindex im Bereich des sichtbaren Spektrums, der anders als der erste Brechungsindex ist, aufweist;
Entfernen des Substrats von den mehreren abwechselnden Schichten aus dielektrischen Materialien; und
Brechen, Zerstoßen und/oder Mahlen der mehreren abwechselnden Schichten zu Plättchen (18), um die dielektrischen Pigmente auszubilden.

14. Verfahren nach Anspruch 13, wobei das Ausbilden der mehreren abwechselnden Schichten aus dielektrischen Materialien das Nutzen eines Verfahrens der physikalischen Gasphasenabscheidung (*physical vapor deposition* - PVD) zum Abscheiden der ersten und zweiten Schicht umfasst.

15. Verfahren nach Anspruch 13 oder 14, ferner folgende Schritte umfassend:
Vorhersagen - unter Nutzung eines Prozessors (118) und eines oder mehrerer Vorhersagemodelle - einer entsprechenden Schichtstruktur, eines entsprechenden sichtbaren Erscheinungsbildes, darunter einer Farbe, und einer entsprechenden Radareigenschaft für jedes von einem oder mehreren in Betracht kommenden dielektrischen Pigmenten innerhalb einer Lack- oder Harzmatrix; und
Erzeugen - unter Nutzung des Prozessors (118) - der dielektrischen Pigmente, die einem von dem einen oder den mehreren entsprechenden in Betracht kommenden dielektrischen Pigmenten innerhalb der Lack- oder Harzmatrix, die in ihrem Erscheinungsbild, darunter der Farbe, gleich einer angestrebten metallhaltigen Beschichtung oder dieser im Wesentlichen ähnlich ist, entsprechen, wobei das Erzeugen wenigstens zum Teil auf dem entsprechenden sichtbaren Erscheinungsbild, darunter der Farbe, und den entsprechenden Radareigenschaften für das eine von dem einen oder den mehreren in Betracht kommenden dielektrischen Pigmenten basiert und wobei das Ausbilden der mehreren abwechselnden Schichten aus dielektrischen Materialien das Ausbilden der mehreren abwechselnden Schichten aus dielektrischen Materialien, die der entsprechenden Schichtstruktur des einen von dem einen oder den mehreren in Betracht kommenden dielektrischen Pigmenten entsprechen, umfasst.

16. Radarkompatible Beschichtung (10), umfassend:
ein oder mehrere Harze (16);
dielektrische Pigmente (12), die in das eine oder die mehreren Harze eingearbeitet sind und ein metallisches Erscheinungsbild aufweisen, wobei jedes der dielektrischen Pigmente ein Plättchen (18) umfasst, das eine Dicke von 500 bis 1200 nm aufweist, wobei das Plättchen (18) mehrere abwechselnde Schichten (20, 22, 24, 26, 28) aus dielektrischen Materialien umfasst, darunter eine erste Schicht, die aus einem ersten dielektrischen Material mit einem ersten Brechungsindex im Bereich des sichtbaren Spektrums ausgebildet ist, und eine zweite Schicht, die der ersten dielektrischen Schicht benachbart angeordnet ist und aus einem zweiten dielektrischen Material mit einem zweiten Brechungsindex im Bereich des sichtbaren Spektrums, der anders als der erste Brechungsindex ist, ausgebildet ist; und
optional ein oder mehrere Additive, einen oder mehrere Promotoren, ein oder mehrere Härtungsmittel, einen Träger auf Wasser- und/oder Lösemittelbasis, ein oder mehrere Farbstoffe, ein oder mehrere Pigmente oder Kombinationen davon.

## Revendications

1. Pigment diélectrique (12) ayant une apparence métallique pour un revêtement compatible avec les radars (10), le pigment diélectrique comprenant :
un flocon (18) ayant une épaisseur allant de 500 à 1 200 nm et comprenant une pluralité de couches alternées (20, 22, 24, 26, 28) de matériaux diélectriques comprenant une première couche formée d'un premier matériau diélectrique ayant un premier indice de réfraction dans le domaine du spectre visible et une deuxième couche disposée de manière adjacente à la première couche diélectrique et formée d'un deuxième matériau diélectrique ayant un deuxième indice de réfraction dans le domaine du spectre visible qui est différent du premier indice de réfraction.

2. Pigment diélectrique selon la revendication 1, dans lequel le premier indice de réfraction est compris entre 1,25 et 2,0 et le deuxième indice de réfraction est compris entre 2,0 et 3,0, de préférence dans lequel le premier indice de réfraction est compris entre 1,25 et 1,75 et le deuxième indice de réfraction est compris entre 2,25 et 2,75.

3. Pigment diélectrique selon la revendication 1 ou la revendication 2, dans lequel le domaine du spectre visible est définie par des longueurs d'onde allant de 360 à 760 nm.

4. Pigment diélectrique selon l'une quelconque des revendications 1 à 3, dans lequel les matériaux diélectriques ont chacun une constante diélectrique correspondante de 10 ou moins dans une plage de fréquences radar allant de 76 à 81 GHz ;
de préférence, dans lequel les matériaux diélectriques ont chacun une constante diélectrique correspondante allant de 1,5 à 8 dans la plage de fréquences radar allant de 76 à 81 GHz.

5. Pigment diélectrique selon l'une quelconque des revendications 1 à 4, dans lequel les matériaux diélectriques ont chacun une permittivité correspondante de 15 ou moins dans une plage de fréquences radar allant de 76 à 81 GHz.

6. Pigment diélectrique selon l'une quelconque des revendications 1 à 5, dans lequel le flocon est **caractérisé par** au moins l'un des éléments suivants :
une épaisseur allant de 500 à 1 000 nm ; et,
un rayon allant de 10 à 25 µm.

7. Pigment diélectrique selon l'une quelconque des revendications 1 à 6, dans lequel les matériaux diélectriques sont choisis dans le groupe des matériaux semi-conducteurs.

8. Pigment diélectrique selon l'une quelconque des revendications 1 à 7, dans lequel les matériaux diélectriques sont choisis dans le groupe des oxydes métalliques.

9. Pigment diélectrique selon l'une quelconque des revendications 1 à 6, dans lequel le premier matériau diélectrique comprend du SiO₂ et le deuxième matériau diélectrique comprend du TiO₂.

10. Pigment diélectrique selon l'une quelconque des revendications 1 à 6, dans lequel la pluralité de couches alternées de matériaux diélectriques sont des couches alternées de SiO₂ et de TiO₂.

11. Pigment diélectrique selon l'une quelconque des revendications 1 à 10, dans lequel chacune des couches alternées a une épaisseur correspondante allant de 30 à 200 nm.

12. Pigment diélectrique selon l'une quelconque des revendications 1 à 11, dans lequel la pluralité de couches alternées de matériaux diélectriques est comprise entre 5 et 15 couches.

13. Procédé de fabrication de pigments diélectriques (12) tel que défini dans la revendication 1, le procédé comprenant les étapes de :
formation d'une pluralité de couches alternées (20, 22, 24, 26, 28) de matériaux diélectriques recouvrant un substrat, dans lequel la formation de la pluralité de couches alternées de matériaux diélectriques comprend :
le dépôt d'une première couche d'un premier matériau diélectrique sur le substrat, dans lequel le premier matériau diélectrique a un premier indice de réfraction dans le domaine du spectre visible ; et,
le dépôt d'une deuxième couche d'un deuxième matériau diélectrique au-dessus de la première couche, dans lequel le deuxième matériau diélectrique a un deuxième indice de réfraction dans le domaine du spectre visible qui est différent du premier indice de réfraction ;
retrait du substrat de la pluralité de couches alternées de matériaux diélectriques ; et,
rupture, écrasement et/ou broyage de la pluralité de couches alternées en flocons (18) pour former les pigments diélectriques.

14. Procédé selon la revendication 13, dans lequel la formation de la pluralité de couches alternées de matériaux diélectriques comprend l'utilisation d'un processus de dépôt physique en phase vapeur (PVD) pour déposer la première et la deuxième couche.

15. Procédé selon la revendication 13 ou la revendication 14 comprenant en outre les étapes suivantes :
la prédiction, à l'aide d'un processeur (118) et d'un ou de plusieurs modèles prédictifs, d'une structure de couche correspondante, d'une apparence visible correspondante, y compris une couleur, et d'une propriété radar correspondante pour chacun d'un ou de plusieurs pigments diélectriques candidats au sein d'une matrice de peinture ou de résine ; et,
la génération, à l'aide du processeur (118), des pigments diélectriques qui correspond à l'un des un ou plusieurs pigments diélectriques candidats correspondants à l'intérieur de la matrice de peinture ou de résine qui est identique ou substantiellement similaire en apparence à un revêtement cible contenant du métal, y compris la couleur, dans lequel la génération est basée au moins en partie sur l'apparence visible correspondante, y compris la couleur et les propriétés radar correspondantes pour un ou plusieurs pigments diélectriques candidats, et dans lequel la formation de la pluralité de couches alternées de matériaux diélectriques comprend la formation de la pluralité de couches alternées de matériaux diélectriques qui correspondent à la structure de couche correspondante d'un ou de plusieurs pigments diélectriques candidats.

16. Revêtement compatible avec les radars (10) comprenant :
une ou plusieurs résines (16) ;
des pigments diélectriques (12) incorporés dans la ou les résines et ayant une apparence métallique,
dans lequel chacun des pigments diélectriques comprend un flocon (18) d'une épaisseur allant de 500 à 1 200 nm, ledit flocon (18) comprenant une pluralité de couches alternées (20, 22, 24, 26, 28) de matériaux diélectriques comprenant une première couche formée d'un premier matériau diélectrique ayant un premier indice de réfraction dans le domaine du spectre visible et une deuxième couche disposée à côté de la première couche diélectrique et formée d'un deuxième matériau diélectrique ayant un deuxième indice de réfraction dans le domaine du spectre visible qui est différent du premier indice de réfraction ; et,
éventuellement, un ou plusieurs additifs, un ou plusieurs promoteurs, un ou plusieurs agents de durcissement, un support à base d'eau et/ou de solvant, un ou plusieurs colorants, un ou plusieurs pigments, ou des combinaisons de ceux-ci.
